# EUROPÄISCHE PATENTSCHRIFT

(11) **EP 2 207 977 B1**
(45) Veröffentlichungstag und Bekanntmachung des Hinweises auf die Patenterteilung: **05.12.2012**
(21) Anmeldenummer: 08802838.6
(22) Anmeldetag: 09.10.2008
(51) Int. Cl.: F16D 7/02

(54) **FAHRZEUG, INSBESONDERE MOTORRAD MIT EINER DREHMOMENT BEGRENZENDEN EINRICHTUNG**
VEHICLE, PARTICULARLY A MOTORCYCLE HAVING A TORQUE-LIMITING UNIT
VÉHICULE, EN PARTICULIER UNE MOTO, COMPORTANT UN MÉCANISME LIMITANT LE COUPLE DE ROTATION

(30) Priorität: 09.11.2007 DE 102007053517
(43) Veröffentlichungstag der Anmeldung: 21.07.2010
(73) Patentinhaber: Bayerische Motoren Werke Aktiengesellschaft, 80809 München (DE)
(72) Erfinder: THEOBALD, Markus, 85764 Unterschleissheim (DE)
(86) Internationale Anmeldenummer: PCT/EP2008/008517
(87) Internationale Veröffentlichungsnummer: WO 2009/059674

(56) Entgegenhaltungen:
- WO-A-2005/064176
- GB-A- 872 592
- GB-A- 2 297 000
- US-A- 4 833 938
- US-A1- 2002 160 887

## Beschreibung

Die vorliegende Erfindung betrifft ein Fahrzeug, insbesondere ein Motorrad, gemäß den Merkmalen des Patentanspruches 1.

Zum relevanten Stand der Technik zählen die GB 872 592 A, US 202/160887A1, WO 2005/064176 A, US 4 833 938 A sowie die GB 2 297 000 A.

Beim Befahren von Fahrbahnen mit stark wechselnden Haftbedingungen können im Antriebsstrang von Fahrzeugen starke Drehmomentspitzen auftreten. Wenn die Antriebsräder auf rutschigem Untergrund durchdrehen und anschließend schlagartig wieder "greifen" können, können im Antriebsstrang "Drehmomentüberhöhungen" auftreten, die ein Vielfaches des vom Motor erzeugbaren maximalen Drehmoments betragen können. Dieses Problem kann prinzipiell bei allen Arten von Straßen- und Geländefahrzeugen auftreten. Insbesondere bei Geländemotorrädern, mit denen auch Sprünge durchgeführt werden, besteht die Gefahr, dass derartige Drehmomentspitzen zu Überbeanspruchungen des Ketten- bzw. Kardanantriebs oder einzelner Antriebskomponenten führen.

Bei den meisten herkömmlichen Fahrzeugen können eventuell auftretende Drehmomentspitzen lediglich durch die Anfahrkupplung begrenzt werden. Bei Motorrädern, bei denen die Kupplung mittels eines Handhebels betätigt wird, darf die Betätigungskraft am Kupplungshebel eine vorgegebene maximale Betätigungskraft, die von allen Fahrern aufgebracht werden kann, nicht überschreiten. Zur Kompensation von Fertigungstoleranzen und Verschleiß müssen Kupplungen allerdings mit Sicherheitsfaktoren zwischen 1,3 und 1,8 ausgelegt werden, was insbesondere bei nassen Schaltkupplungen große Durchmesser bzw. viele Reibpartner erfordert und dementsprechend das Massenträgheitsmoment der Kupplung erhöht. Je größer das Massenträgheitsmoment des Antriebsstrangs umso weniger können Drehmomentspitzen ausgeblendet werden, da die Drehmomentspitzen üblicherweise nur sehr kurz bzw. schlagartig wirken.

Hinzu kommt, dass bei selbstverstärkenden Anfahrkupplungen, wie sie z.B. bei Sportmotorrädern eingesetzt werden, auftretende Lastspitzen eine zusätzliche Schließkraft an der Kupplung bewirken und somit Lastspitzen durch die Anfahrkupplung nicht begrenzt werden können, was im Extremfall zu Kettenschäden, Getriebeschäden und sogar Gehäuserissen an der Motor-/Getriebeeinheit führen können.

Aufgabe der Erfindung ist es, ein Fahrzeug zu schaffen, bei dem im Antriebsstrang auftretende Last- bzw. Drehmomentspitzen zuverlässig auf ein konstruktiv vorgegebenes Maximalmoment begrenzt werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Motor und einer Kurbelwelle, die über eine Kupplung mit einem Getriebe gekoppelt ist. Der Kern der Erfindung besteht darin, dass im Drehmomentpfad zwischen der Kupplung und einem Ausgang des Getriebes eine Drehmoment begrenzende Einrichtung angeordnet ist, deren Aufgabe es ist, Drehmomentspitzen zu begrenzen. Bei der Drehmoment begrenzenden Einrichtung handelt es sich nicht um eine aktiv vom Fahrer bzw. durch ein Steuergerät öffenbare Kupplung, sondern vorzugsweise um eine rein mechanische Rutschkupplung, d. h. um eine "passive Kupplung", die grundsätzlich "geschlossen" ist und nur bei "Überlasten" durchrutscht und somit das übertragbare Drehmoment begrenzt.

Im Folgenden wird die Erfindung im Zusammenhang mit der Zeichnung näher erläutert. Es zeigen:
- Figur 1: ein Ausführungsbeispiel einer Kupplung gemäß der Erfindung; und
- Figur 2: die Kupplung der Figur 1 integriert in eine Motor-/Getriebeeinheit eines Motorrads.

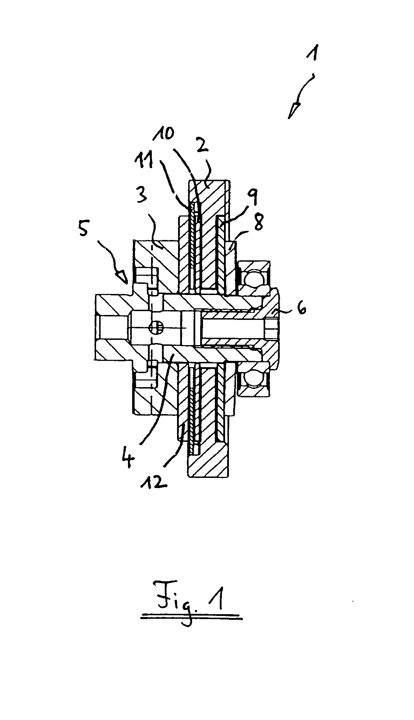

Figur 1 zeigt eine "Drehmoment begrenzende Einrichtung" 1 in Form einer Doppelradrutschkupplung. Die Doppelradrutschkupplung weist ein erstes Zahnrad 2 und ein zweites Zahnrad 3 auf, die beide auf einer Welle 4 angeordnet sind. Die Welle 4 wird im Folgenden auch "Primärtriebwelle" bezeichnet.

Das zweite Zahnrad 3 ist über eine Keilverzahnung 5 oder in anderer Weise drehfest und "nach links" festgelegt mit der Primärtriebwelle 4 verbunden. Das erste Zahnrad 2 hingegen ist nicht mit der Primärtriebwelle 4 drehgekoppelt, sondern drehbar auf der Primärtriebwelle 4 angeordnet. Über eine in die Primärtriebwelle 4 eingeschraubte Schraube 6 und deren über die Primärtriebwelle 4 radial vorstehenden Schraubenkopf und ein Lager 7 sind die beiden Zahnräder 2, 3 "nach rechts" festgelegt. Die beiden Zahnräder 2, 3 werden durch eine sich an dem Lager 7 abstützende Tellerfeder 8 zusammengepresst, wobei zwischen der Tellerfeder 8 und dem Zahnrad 2 eine Reibscheibe 9 angeordnet ist. Zwei weitere Reibscheiben 10, 11 sind zwischen dem Zahnrad 2 und dem Zahnrad 3 angeordnet, wobei zwischen der Reibscheibe 11 und dem Zahnrad 3 noch eine Stützscheibe 12 angeordnet ist.

Bei den Reibscheiben 9-11 kann es sich um Stahlscheiben handeln, deren Reibflächen z. B. mit Molybdän beschichtet sein können. Alternativ dazu können als Reibscheiben auch Kohlefaserscheiben verwendet werden.

Je nach Auslegung der Tellerfeder 8 und der "Reibpartner" wird ab einem gewissen Drehmoment das Zahnrad 2 relativ zu dem Zahnrad 3 "durchrutschen", d. h. das Zahnrad 2 wird sich relativ zu dem Zahnrad 3 und zur Primärtriebwelle 4 drehen, wodurch Drehmomentspitzen begrenzt werden.

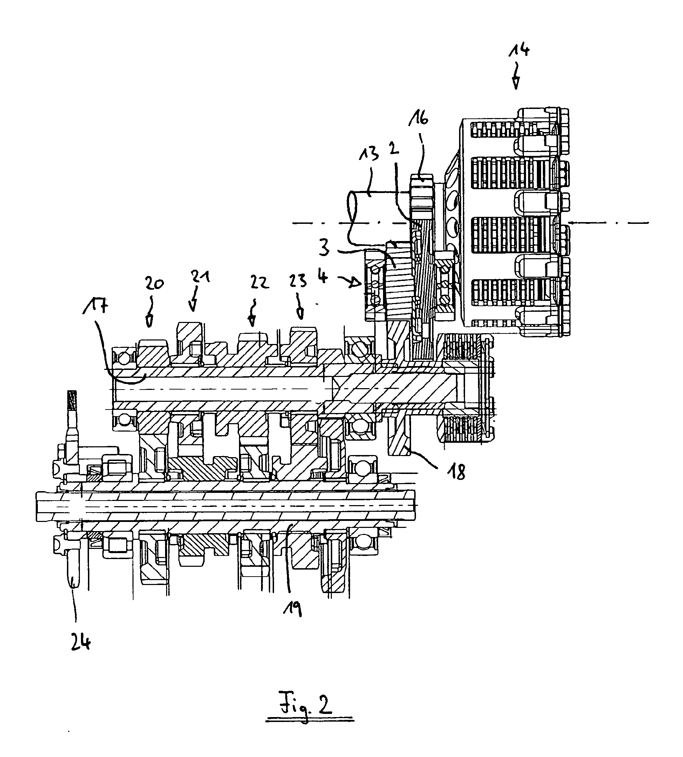

Figur 2 zeigt die Motor-/Getriebeeinheit eines hier nicht näher dargestellten Motorrads. Eine Kurbelwelle 13 eines hier nicht näher dargestellten Motorradmotors treibt die Eingangsseite einer auf der Kurbelwelle 13 angeordneten Kupplung 14 an. Bei der Kupplung 14 handelt es sich um eine Anfahrkupplung. Mit einem Abtriebselement der Kupplung 14 drehfest verbunden ist ein Zahnrad 16, das mit dem auf der Primärwelle 4 angeordneten ersten Zahnrad 2 kämmt, welches wiederum reibschlüssig mit dem zweiten Zahnrad 3 gekoppelt ist. Details dieser reibschlüssigen Kopplung bzw. der Anordnung der beiden Zahnräder 2, 3 auf der Primärtriebwelle 4 sind Figur 1 zu entnehmen. Das zweite Zahnrad 3 wiederum kämmt mit einem auf einer Getriebeeingangswelle 17 angeordneten Zahnrad 18. Auf der Getriebeeingangswelle 17 und einer Getriebeausgangswelle 19 sind mehrere schaltbare Zahnradstufen 20-23 angeordnet. Auf der Getriebeausgangswelle 19 ist ferner ein Ritzel 24 angeordnet, das z. B. über eine Kette oder einen Riemen, wie z.B. einen Zahnriemen, ein Hinterrad des Motorrads antreibt.

Wie aus Figur 2 ersichtlich ist, ist die Primärtriebwelle 4, die Getriebeeingangswelle 17 und die Getriebeausgangswelle 19 parallel versetzt zur Kurbelwelle 13 angeordnet. Ein am Hinterrad des Motorrads auftretender Drehmomentschlag pflanzt sich über das Getriebeausgangsritzel 24, die Getriebeausgangswelle 19, die Getriebeeingangswelle 17 und die Zahnradstufe 18, 3 fort. Bei Überschreiten eines konstruktiv vorgegebenen Maximalmoments rutschen die beiden reibschlüssig miteinander drehgekoppelten Zahnräder 2, 3 durch, so dass das im Antriebsstrang auftretende Moment begrenzt wird.

Eine Doppelradrutschkupplung, wie sie in den Figuren 1 und 2 beschrieben ist, ist sehr kompakt aufgebaut und kostengünstig darstellbar. Durch eine derartige Doppelradrutschkupplung können in einfacher Weise Antriebsstrangkomponenten, wie z. B. Ketten, Riemen, Zahnräder, Wellen etc. vor übermäßiger Beanspruchung geschützt werden.

## Patentansprüche

1. Fahrzeug mit einem Motor und einer Kurbelwelle (13), die über eine Kupplung (14) mit einem Getriebe gekoppelt ist, wobei im Drehmomentpfad zwischen der Kupplung (14) und einem Ausgang (24) des Getriebes eine Drehmoment begrenzende Einrichtung (1) angeordnet ist, wobei die Kupplung eine Anfahrkupplung ist und die Drehmoment begrenzende Einrichtung (1) zwei koaxial angeordnete, reibschlüssig gekoppelte Zahnräder (2, 3) aufweist.

2. Fahrzeug nach Anspruch 1, **dadurch gekennzeichnet, dass** die drehmomentbegrenzte Einrichtung (1) eine rein mechanische Rutschkupplung ist.

3. Fahrzeug nach einem der Ansprüche 1 oder 2, **dadurch gekennzeichnet, dass** die beiden Zahnräder (2, 3) durch mindestens ein Federelement (8) in einer Axialrichtung gegeneinander verspannt sind.

4. Fahrzeug nach Anspruch 3, **dadurch gekennzeichnet, dass** das mindestens eine Federelement (8) eine Tellerfeder ist.

5. Fahrzeug nach einem der Ansprüche 3 oder 4, **dadurch gekennzeichnet, dass** zwischen dem Federelement (8) und einem der beiden Zahnräder (2) eine erste Reibscheibe (9) angeordnet ist.

6. Fahrzeug nach einem der Ansprüche 1 bis 5, **dadurch gekennzeichnet, dass** zwischen den beiden Zahnrädern (2, 3) mindestens eine weitere Reibscheibe (10, 11) angeordnet ist.

7. Fahrzeug nach einem der Ansprüche 5 oder 6, **dadurch gekennzeichnet, dass** mindestens eine der Reibscheiben (9-11) eine Stahlscheibe ist, auf die eine Reibschicht aus Molybdän aufgebracht ist.

8. Fahrzeug nach einem der Ansprüche 5 bis 7, **dadurch gekennzeichnet, dass** mindestens eine der Reibscheiben (9-11) ganz oder teilweise aus Kohlefasermaterial besteht.

9. Fahrzeug nach einem der Ansprüche 1 bis 8, **dadurch gekennzeichnet, dass** die beiden Zahnräder (2, 3) auf einer Welle (4) angeordnet sind, wobei eines der beiden Zahnräder (3) drehfest mit der Welle (4) verbunden ist und das andere der beiden Zahnräder (2) drehbar in Bezug auf die Welle (4) angeordnet ist.

10. Fahrzeug nach einem der Ansprüche 1 bis 9, **dadurch gekennzeichnet, dass** das Fahrzeug ein Motorrad ist.

11. Fahrzeug nach einem der Ansprüche 1 bis 10, **dadurch gekennzeichnet, dass** die Kupplung (14) koaxial zur Kurbelwelle (13) bzw. auf der Kurbelwelle (13) angeordnet ist.

12. Fahrzeug nach einem der Ansprüche 1 bis 11, **dadurch gekennzeichnet, dass** die beiden Zahnräder (2, 3) der Drehmoment begrenzenden Einrichtung (19) auf einer Primärtriebwelle (4) angeordnet sind, die parallel versetzt zur Kurbelwelle (13) angeordnet ist, wobei eines der beiden Zahnräder (2) der Drehmoment begrenzenden Einrichtung (1) mit einem Zahnrad (16) kämmt, das mit einem Abtriebselement der Kupplung (14) drehgekoppelt ist.

13. Fahrzeug nach einem der Ansprüche 1 bis 12, **dadurch gekennzeichnet, dass** das andere der beiden Zahnräder (3) der Drehmoment begrenzenden Einrichtung (1) mit einem auf einer Getriebeeingangswelle (17) angeordneten Zahnrad (18) kämmt, wobei die Getriebeeingangswelle (17) wiederum parallel versetzt zur Primärtriebwelle (4) angeordnet ist.

## Claims

1. A vehicle comprising an engine and a crankshaft (13) coupled by a clutch (14) to a gear unit, wherein a torque-limiting device (1) is disposed in the torque path between the clutch (14) and an output (24) of the gear unit, wherein the clutch is a starting clutch and the torque-limiting device (1) has two coaxial frictionally engaged gearwheels (2, 3).

2. A vehicle according to claim 1, **characterised in that** the torque-limiting device (1) is a purely mechanical slipping clutch.

3. A vehicle according to claim 1 or claim 2, **characterised in that** the two gearwheels (2, 3) are braced against one another in an axial direction by at least one spring element (8).

4. A vehicle according to claim 3, **characterised in that** the at least one spring element (8) is a cup spring.

5. A vehicle according to claim 3 or claim 4, **characterised in that** a first friction disc (9) is disposed between the spring element (8) and one of the two gearwheels (2).

6. A vehicle according to any of claims 1 to 5, **characterised in that** at least one additional frictional disc (10, 11) is disposed between the two gearwheels (2, 3).

7. A vehicle according to claim 5 or claim 6, **characterised in that** at least one of the discs (9 - 11) is a steel disc on which a molybdenum friction layer is deposited.

8. A vehicle according to any of claims 5 to 7, **characterised in that** at least one friction disc (9 - 11) is made wholly or partly of carbon fibre material.

9. A vehicle according to any of claims 1 to 8, **characterised in that** the two gearwheels (2, 3) are disposed on a shaft (4) wherein one of the two gearwheels (3) is co-rotatably connected to the shaft (4) and the other of the two gearwheels (2) is rotatable relative to the shaft (4).

10. A vehicle according to any of claims 1 to 9, **characterised in that** the vehicle is a motorcycle.

11. A vehicle according to any of claims 1 to 10, **characterised in that** the clutch (14) is disposed coaxial with or on the crankshaft (13).

12. A vehicle according to any of claims 1 to 11, **characterised in that** the two gearwheels (2, 3) of the torque-limiting device (19) are disposed on a primary driving shaft (4) disposed parallel with the crankshaft (13), wherein one of the two gearwheels (2) of the torque-limiting device (1) meshes with a gearwheel (16) which is rotatably coupled to a driven element of the clutch (14).

13. A vehicle according to any of claims 1 to 12, **characterised in that** the other of the two gearwheels (3) of the torque-limiting device (1) meshes with a gearwheel (18) disposed on a gear input shaft (17), wherein the shaft (17) is disposed parallel with the primary driven shaft (4) as before.

## Revendications

1. Véhicule équipé d'un moteur et d'un vilebrequin (13) couplé à une transmission par l'intermédiaire d'un embrayage (14),
- le chemin de transmission du couple entre l'embrayage (14) et la sortie (24) de la transmission, comportant une installation de limitation de couple (1),
- l'embrayage ayant un embrayage de démarrage et l'installation de limitation de couple (1) comporte deux pignons (2, 3) coaxiaux, reliés par une liaison par frottement.

2. Véhicule selon la revendication 1,
**caractérisé en ce que**
l'installation de limitation de couple (1) est un accouplement à friction.

3. Véhicule selon l'une des revendications 1 ou 2,
**caractérisé en ce que**
les deux pignons dentés (2, 3) sont précontraints l'un contre l'autre dans la direction axiale par au moins un élément de ressort (8).

4. Véhicule selon la revendication 3,
**caractérisé en ce que**
l'élément de ressort (8) est un ressort Belleville.

5. Véhicule selon l'une des revendications 3 ou 4,
**caractérisé par**
un premier disque de friction (9) entre l'élément de ressort (8) et l'un des deux pignons dentés (2).

6. Véhicule selon l'une des revendications 1 à 5,
**caractérisé par**
au moins un autre disque de friction (10, 11) entre les deux pignons dentés (2, 3).

7. Véhicule selon l'une des revendications 5 ou 6,
**caractérisé en ce qu'**
au moins l'un des disques de friction (9-11) est un disque en acier muni d'une couche de friction en Molybdène.

8. Véhicule selon l'une des revendications 5 à 7,
**caractérisé en ce qu'**
au moins l'un des disques de friction (9-11) est réalisé en totalité ou en partie en un matériau à fibres de carbone.

9. Véhicule selon l'une des revendications 1 à 8,
**caractérisé en ce que**
les deux pignons dentés (2, 3) sont installés sur un arbre (4) et l'un (3) des deux pignons dentés est relié solidairement à l'arbre (4) et l'autre (2) des deux pignons dentés est libre en rotation par rapport à l'arbre (4).

10. Véhicule selon l'une des revendications 1 à 9,
**caractérisé en ce qu'**
le véhicule est une moto.

11. Véhicule selon l'une des revendications 1 à 10,
**caractérisé en ce que**
l'embrayage (14) est coaxial au vilebrequin (13) ou est monté sur le vilebrequin (13).

12. Véhicule selon l'une des revendications 1 à 11,
**caractérisé en ce que**
les deux pignons dentés (2, 3) de l'installation de limitation de couple (19) sont montés sur un arbre d'entraînement primaire (4) décalé parallèlement au vilebrequin (13) et l'un (2) des deux pignons dentés de l'installation de limitation de couple (1) engrène avec un pignon (16) couplé en rotation à l'élément de sortie de l'embrayage (14).

13. Véhicule selon l'une des revendications 1 à 12,
**caractérisé en ce que**
l'autre (3) des deux pignons dentés de l'installation de limitation de couple (1) engrène avec un pignon denté (18) monté sur l'arbre d'entrée (17) de la transmission, cet arbre d'entrée (17) étant décalé également, parallèlement à l'arbre primaire (4).
